(19) **Europäisches Patentamt / European Patent Office / Office européen des brevets**

(11) **EP 1 814 301 A1**

(12) **EUROPEAN PATENT APPLICATION**

(43) Date of publication:
**01.08.2007 Bulletin 2007/31**

(51) Int Cl.:
***H04N 1/40*** (2006.01)

(21) Application number: **06022078.7**

(22) Date of filing: **20.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.01.2006 JP 2006021629**

(71) Applicant: **Olympus Corporation**
**Shibuya-ku, Tokyo (JP)**

(72) Inventors:
• **Fujiki, Hiroshi**
  **Hachioji-shi**
  **Tokyo (JP)**
• **Masuyama, Hideyuki**
  **Machida-shi**
  **Tokyo (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **Microscopic image pickup apparatus and microscopic image pickup method**

(57) There is disclosed a microscopic image pickup apparatus to be attached to a microscope device to which a plurality of specular methods are applicable, the apparatus being configured to set conversion coefficients for use in conversion of a color image into a monochromatic image so as to adapt the coefficients to a selected specular method. In the present invention, since the conversion coefficients suitable for the selected specular method are set, monochromatic conversion coefficients suitable for the specular method can easily be set without performing any special image processing. As a result, it is possible to obtain the monochromatic image adapted to the specular method and having an excellent grayscale characteristic.

Fig. 1

EP 1 814 301 A1

**Description**

CROSS-REFERENCE TO RELATED APPLICATION

This application is based upon and claims the benefit of priority from prior Japanese Patent Application No. 2006-021629, filed on January 31, 2006.

BACKGROUND OF THE INVENTION

1. Field of the Invention

The present invention relates to a microscopic image pickup apparatus which outputs a monochromatic image derived from a color image observed with a microscope. More particularly, it relates to a microscopic image pickup apparatus constituted so that an output monochromatic image has a broad gray-scale characteristic.

2. Description of the Related Art

Performing microscopic observations and electronically storing observation images have been widely conducted. There are various microscopic observation methods (specular methods), and the suitable method is selected in accordance with an observation purpose. Among these specular methods, in a fluorescence observation method, an observation sample is dyed using a fluorescence reagent, and a fluorescence color emission state of the sample when irradiated with exciting light is observed. The fluorescence basically causes a monochromatic light emitting phenomenon. Therefore, it is sufficient to record a monochromatic image instead of recording any color image, and this is also advantageous in respect of a capacity of an image file.

As the fluorescence reagent for use in the fluorescence observation, FITC, Rodamine, DAPI and the like are known. The FITC emits the fluorescence in which a green component is dominant, Rodamine emits the fluorescence in which red and green components are dominant, and DAPI emits the fluorescence in which a blue component is dominant, respectively.

When an RGB color image signal defined by color component signals of red (R), green (G) and blue (B) is converted into a monochromatic image (gray scale) signal, the signal is in general converted into a monochromatic image signal (luminance signal) Y by the following equation:

$$Y = k_R*R+k_G*G+k_B*B \quad ... \text{ (Equation 1)},$$

wherein as conversion coefficients $k_R$, $k_G$ and $k_B$, 0.3, 0.59 and 0.11 are in general employed, respectively. This set of conversion coefficients is suitable for a general image without any deviation in the RGB components, but in a case where monochromatic light is emitted as in the above fluorescently observed image, an only specific color component contributes to the luminance signal. Therefore, when the conversion coefficient set is applied, only about 10% of the maximum gray scale of the luminance signal can be utilized in a case where a B component is dominant as an extreme case.

To solve the problem, one example of technologies to adjust the conversion coefficients $k_R$, $k_G$ and $k_B$ in accordance with a luminance distribution of the color image is described in Japanese Patent Application Laid-Open No. 2000-105820. In this method, a luminance histogram of the color image is prepared during preprocessing of conversion of a color image into a monochromatic image, and the conversion coefficients are determined based on this histogram.

Moreover, a technology is described in Japanese Patent Application Publication No. 7-96005 in which to record an endoscopically observed image, specific color components of RGB are selected, and an image is converted into a monochromatic image, and displayed in a plurality of monitor devices so that the visibility of the resulting monochromatic image is improved.

However, in the inventions described in the above documents, it is required to produce and analyze a histogram, or to use a plurality of monitor devices. Therefore, these inventions require special image processing in addition to calculation processing of Equation 1.

An object of the present invention is to provide a microscopic image pickup apparatus capable of easily setting monochromatic conversion coefficients suitable for a specular method without performing any special image processing.

BRIEF SUMMARY OF THE INVENTION

A microscopic image pickup apparatus of the present invention is a microscopic image pickup apparatus to be attached to a microscope device to which a plurality of specular methods are applicable, the apparatus being configured to set conversion coefficients for use in conversion from a color image into a monochromatic image so as to adapt the coefficients to the selected specular method.

The setting of the conversion coefficients includes: a case where an operator arbitrarily sets the conversion coefficients; a case where the conversion coefficients are selected from alternatives or recommended values prepared on the side of the microscopic image pickup apparatus; and a case where the conversion coefficients are automatically set on the side of the microscopic image pickup apparatus. In any case, since the conversion coefficients suitable for the selected specular method are set in the microscopic image pickup apparatus of the present invention, the monochromatic conversion coefficients suitable for the specular method can easily be set without performing any special image processing. As a result, it is possible to obtain a monochromatic image having an excellent gray-scale characteristic adapted to the selected specular method.

One example of a configuration of the microscopic image pickup apparatus in the present invention will be described hereinafter. The apparatus comprises: an image sensor which outputs a microscopically observed image as a color image; a coefficient setting section which sets color image/monochromatic image conversion coefficients adapted to a selected specular method; and an image converting section which converts the color image into a monochromatic image by use of the set color image/monochromatic image conversion coefficients.

Moreover, the present invention can be understood as a method of activating a monochromatic image by use of a microscopic image pickup apparatus to be attached to a microscope device to which a plurality of specular methods are applicable. Furthermore, the present invention can be understood as an information recording medium to record a program which allows the above method to be executed.

BRIEF DESCRIPTION OF THE SEVERAL VIEWS OF THE DRAWINGS

These and other features, aspects, and advantages of the apparatus and methods of the present invention will become better understood with regard to the following description, appended claims, and accompanying drawings where:

FIG. 1 is a block diagram of a microscopic image pickup apparatus in a first embodiment;
FIG. 2 is a flow chart showing a photographing operation in the first embodiment;
FIG. 3 shows one example of a conversion coefficient selection GUI in the first embodiment;
FIG. 4 shows one example of a conversion coefficient selection GUI in a modification;
FIG. 5 is a block diagram of a microscopic image pickup apparatus in a second embodiment;
FIG. 6 is a flow chart showing a photographing operation in the second embodiment;
FIG. 7 shows one example of a conversion coefficient selection GUI in the second embodiment;
FIG. 8 shows one example of a conversion coefficient selection GUI in a modification;
FIG. 9 shows one example of a conversion coefficient selection GUI in another modification;
FIG. 10 is a block diagram of a microscopic image pickup apparatus in a third embodiment;
FIG. 11 is a flow chart showing a photographing operation in the third embodiment; and
FIG. 12 is a flow chart showing a best conversion coefficient extracting operation.

DETAILED DESCRIPTION OF THE PREFERRED EMBODIMENTS

Preferred embodiments of the invention are described below with reference to the accompanying drawings.

(First Embodiment)

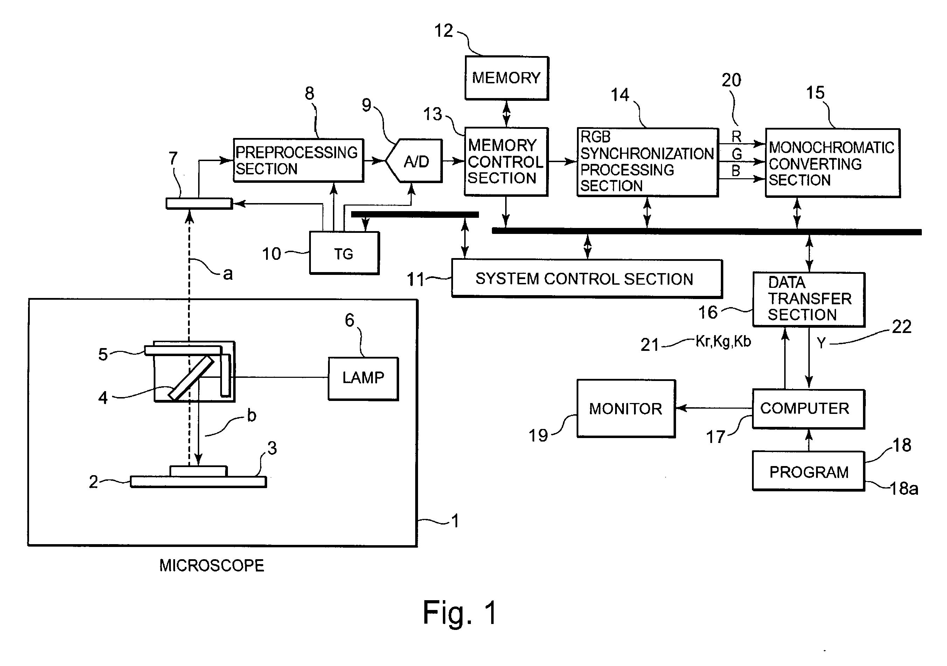

A configuration of a first embodiment will be described. FIG. 1 is a block diagram showing the first embodiment of the present invention. A microscope 1 has a configuration suitable for performing fluorescence observation that is one type of specular methods. Exciting light b emitted from a lamp 6 reaches a sample 3 on a stage 2 through a fluorescence cube 4. The fluorescence observation sample 3 is dyed with a fluorescence reagent, and emits fluorescence a. The fluorescence cube 4 includes an optical filter having a function of selecting a specific wavelength of the exciting light b and removing the component of the exciting light from the fluorescence a. In a cube turret (not shown) to which a plurality of fluorescence cubes 4 can be attached, one of the plurality of fluorescence cubes 4 can be selected manually or by an electromotive actuator, and an operator can select the fluorescence cube 4 having the optical filter provided with an appropriate characteristic in accordance with the specular method.

The fluorescence a emitted from the sample 3 is guided to an image sensor (image pickup means) 7, and converted into an image signal. A preprocessing section 8 is a front-end section which processes the image signal from the image sensor 7. Here, noise component removal and signal level adjustment are performed, and the preprocessing section outputs the image signal according to the type of a color filter of the image sensor. An A/D converter 9 converts this image signal into a color digital image signal. An timing generator (TG) 10 is a driving pulse generator for driving the image sensor 7, the preprocessing section 8 and the A/D converter 9 at predetermined timings.

A memory control section 13 writes the color digital image signal output from the A/D converter 9 into a memory 12, and outputs the color digital image signal read from the memory 12 to an RGB synchronization processing section 14 at another timing.

The RGB synchronization processing section 14 performs a parallelization by separating the color digital signal into RGB color components and forming a RGB image signals 20. When the image sensor 7 is a color image sensor having the Bayer arrangement, the RGB synchronization processing section 14 performs the parallelization by separating, into the RGB color components, a Bayer encode image signal output from the image sensor 7 in accordance with a color encode scheme (Bayer arrangement) to obtain the RGB image signals 20.

A monochromatic converting section 15 converts the RGB image signals 20 output from the RGB synchronization processing section 14 into a monochromatic image signal in accordance with monochromatic conversion coefficients (color image/monochromatic image conversion coefficients) designated by a system control section 11. In this sense, the monochromatic converting section 15 can be referred to as an image converting section (image converting means) which converts the color image into the monochromatic image. A data transfer section 16 transfers the monochromatic image signal output from the monochromatic converting section 15 into a calculator (computer device) 17. The system control section 11 controls operations of the TG 10, the memory control section 13, the RGB synchronization processing section 14, the monochromatic converting section 15 and the data transfer section 16 via a bus line.

The computer 17 reads out a processing program 18 to successively execute designated commands. This processing program is stored in a storage medium 18a readable by the computer device. This storage medium may be of either a fixed type or a detachably attached type.

The computer 17 reads out the monochromatic image signal output from the data transfer section 16 in accordance with the processing program 18, and displays the signal in an image monitor 19. Moreover, the processing program 18 is also provided with a screen user interface (GUI) for an operator to arbitrarily set monochromatic conversion coefficients 21, and also notifies the system control section 11 of the monochromatic conversion coefficients 21 set by the operator. In this sense, the computer 17 may be referred to as a coefficient setting section (coefficient setting means) which sets the color image/monochromatic image conversion coefficients.

Subsequently, there will be described a function of the first embodiment provided with such a configuration.

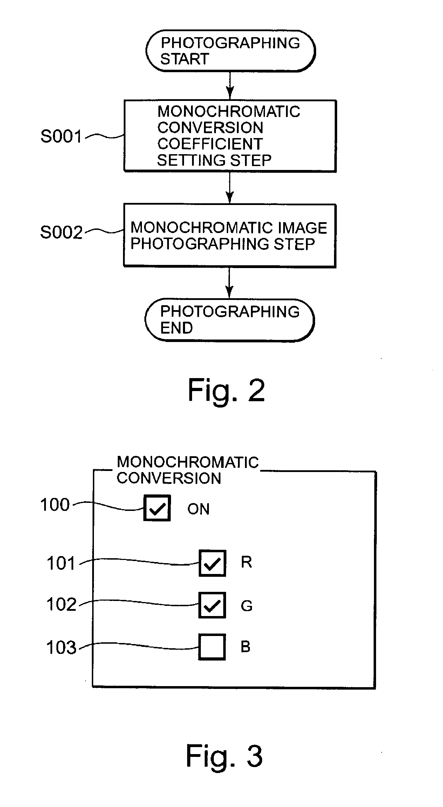

FIG. 2 is a flow chart showing an outline of an operation procedure of an operator in the first embodiment. First, the operator sets the monochromatic conversion coefficients 21 by the GUI (S001). One example of a GUI screen at this time is shown in FIG. 3. This GUI screen is displayed in the image monitor 19 at a time when the computer 17 executes the processing program 18.

The operator checks a check box 100 to validate a monochromatic conversion coefficient setting function in this GUI screen. At this time, designation can be performed by arbitrarily combining a check box 101 to set a conversion coefficient $k_R$ for a red component R to be off (0.0) or on (1.0), a check box 102 to set a conversion coefficient $k_G$ for a green component G to be off or on, and a check box 103 to set a conversion coefficient $k_B$ for a blue component B to be off or on. The figure shows an example in which the check boxes 100, 101 and 102 are turned on, and the check box 103 is off. In this example, a digitalized selection is performed to set the monochromatic conversion coefficient to 0 or 1.

As to this check box setting, for example, in a case where a fluorescence image is observed using fluorescence reagent Rodamine, the R component and the G component are dominant in the fluorescence emitted color as described above. Therefore, when the check boxes 100, 101 and 102 are turned on, and the check box 103 is turned off (state of FIG. 3), the monochromatic image having a preferable gray-scale characteristic can be obtained.

The computer 17 inputs the monochromatic conversion coefficients 21 set in the GUI into the system control section 11 via the data transfer section 16. The system control section 11 inputs the set monochromatic conversion coefficients into the monochromatic converting section 15.

Returning to FIG. 2, the operator operates the computer 17 to which the processing program 18 is applied to instruct the system control section 11 to capture a static picture (S002). The system control section 11 controls the TG 10, the memory control section 13, the RGB synchronization processing section 14, the monochromatic converting section 15 and the data transfer section 16, and converts the captured RGB image of the fluorescence a into the monochromatic image to transfer the image to the computer 17. At this time, the monochromatic converting section 15 converts the RGB image into the monochromatic image by use of the monochromatic conversion coefficients 21 set in the step S001.

As described above, according to the first embodiment, since the monochromatic conversion coefficients can easily be set with the GUI, it is possible to easily obtain the monochromatic image having excellent gray-scale characteristic optimized with respect to the monochromatic image such as in the fluorescence observation.

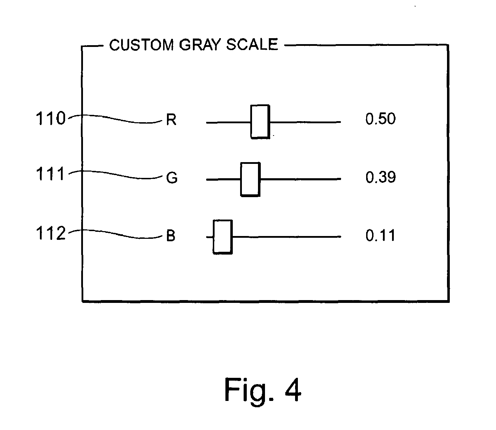

It is to be noted that in the first embodiment, there has been described the configuration of the GUI check box selection system of FIG. 3, but the present invention is not limited to this configuration. As a modification, there may be employed a system in which the monochromatic conversion coefficients are set in a quasi analog manner by use of slide bars similarly by the GUI, instead of the check boxes. An example in which the slide bars are used is shown in FIG. 4.

According to this modification, the monochromatic conversion coefficients can remarkably finely be set. Therefore, for example, values recommended by a fluorescence reagent maker can be applied as they are.

(Second Embodiment)

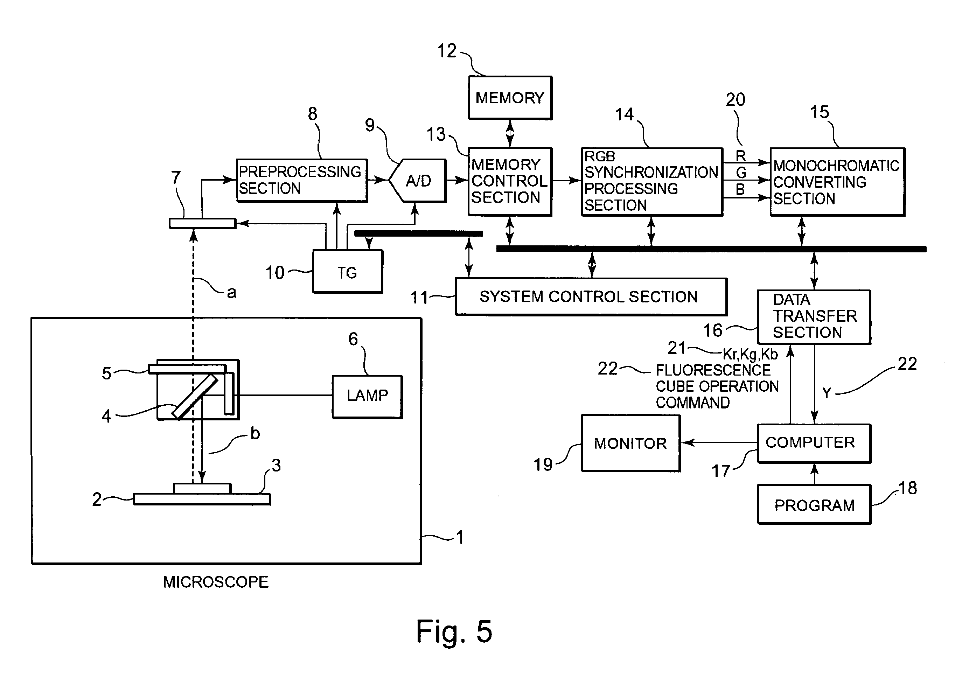

Next, a second embodiment will be described. In the present embodiment, a configuration in which a fluorescence cube operation is set with a GUI is added to the configuration of the first embodiment. FIG. 5 is a block diagram showing the configuration of the second embodiment. A program 18 sets monochromatic conversion coefficients 21 using the GUI in conjunction with a set fluorescence observation method. In a modification of the second embodiment, a fluorescence cube operation command 22 is set using the GUI. Since another configuration is similar to that of the first embodiment, redundant descriptions are omitted.

A function of the second embodiment will be described.

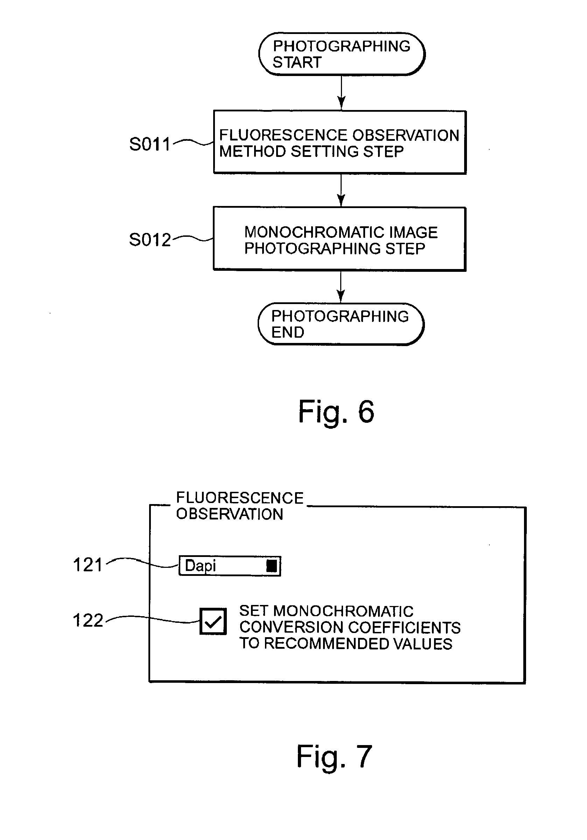

FIG. 6 is a flow chart showing an image pickup procedure of fluorescence observation in the second embodiment. An operator designates the fluorescence observation method using the GUI (S011). One example of GUI screen display displayed in a monitor 19 at this time is shown in FIG. 7. The operator designates the fluorescence observation method by use of a combination box 121 capable of designating various types of fluorescence observation method (i.e., fluorescence reagent), and checks a check box to "set the monochromatic conversion coefficients 21 to recommended values". According to this setting, a computer 17 notifies a system control section 11 of the monochromatic conversion coefficients 21 via a data transfer section 16. The monochromatic conversion coefficients 21 are conversion coefficients adapted to each fluorescence observation method. When, for example, DAPI is selected as the fluorescence reagent, 0.0, 0.3 and 0.7 are set as $k_R$, $k_G$ and $k_B$, respectively. When Rodamine is selected, 0.7, 0.3 and 0.0 are similarly set, respectively.

Returning to FIG. 6, capturing of a static picture is instructed in order to obtain a monochromatic image converted by use of the monochromatic conversion coefficients 21 set in the step S011 (S012).

As described above, according to the second embodiment, since the monochromatic conversion coefficients optimum for various types of fluorescence observation methods are automatically set using the GUI, a monochromatic image having an excellent gray-scale characteristic can easily be obtained.

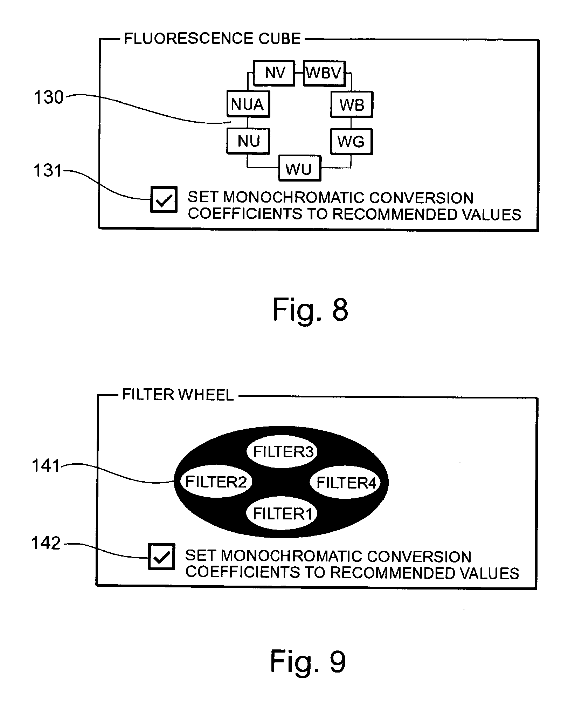

It is to be noted that in the second embodiment, there has been described a configuration in which the monochromatic conversion coefficients suitable for the fluorescence observation method (specifically, a fluorescence reagent) set by the GUI are automatically set as shown in FIG. 7, but the present invention is not limited to this configuration. As a modification, the monochromatic conversion coefficients may automatically be set in accordance with, for example, a fluorescence cube selected by the operator. In this case, a turret provided with various types of fluorescence cubes can be driven by an electromotive actuator. One example of a GUI displayed in the monitor 19 is shown in FIG. 8.

This modification will be described along the procedure of FIG. 6. The operator selects a filter of the fluorescence cube using the GUI (SO11'). In a fluorescence cube selection GUI 130, the operator can select filters such as WU, WB and WG. In addition, it is possible to automatically set monochromatic conversion coefficients optimum for the filter selected by the fluorescence cube selection GUI 130. Here, the filter WU selects a B component as exciting light, and transmits all of RGB components in fluorescence to guide the components into an image sensor 7. In a case where the filter WU is selected in the fluorescence cube selection GUI 130, the monochromatic conversion coefficients 21 for producing a monochromatic image from all of the RGB components are set.

Subsequently, the operator operates the computer 17 to which the processing program 18 has been applied to instruct the system control section 11 to capture the static picture (S012'). The system control section 11 controls a TG 10, a memory control section 13, an RGB synchronization processing section 14, a monochromatic converting section 15 and the data transfer section 16, and converts a captured RGB image of fluorescence a into the monochromatic image to transfer the image to the computer 17. At this time, the monochromatic converting section 15 converts the RGB image into the monochromatic image by use of the monochromatic conversion coefficients 21 set in the step S011.

According to this modification, since the monochromatic conversion coefficients adapted to the selected fluorescence cube are automatically set, the monochromatic image having an excellent gray-scale characteristic can easily be obtained.

Furthermore, in the above modification, the monochromatic conversion coefficients suitable for the filter selected in the fluorescence cube are automatically set. In a further modification, as shown in FIG. 9, a GUI 141 to select a filter wheel is disposed, and monochromatic conversion coefficients adapted to a selected filter may be set.

(Third Embodiment)

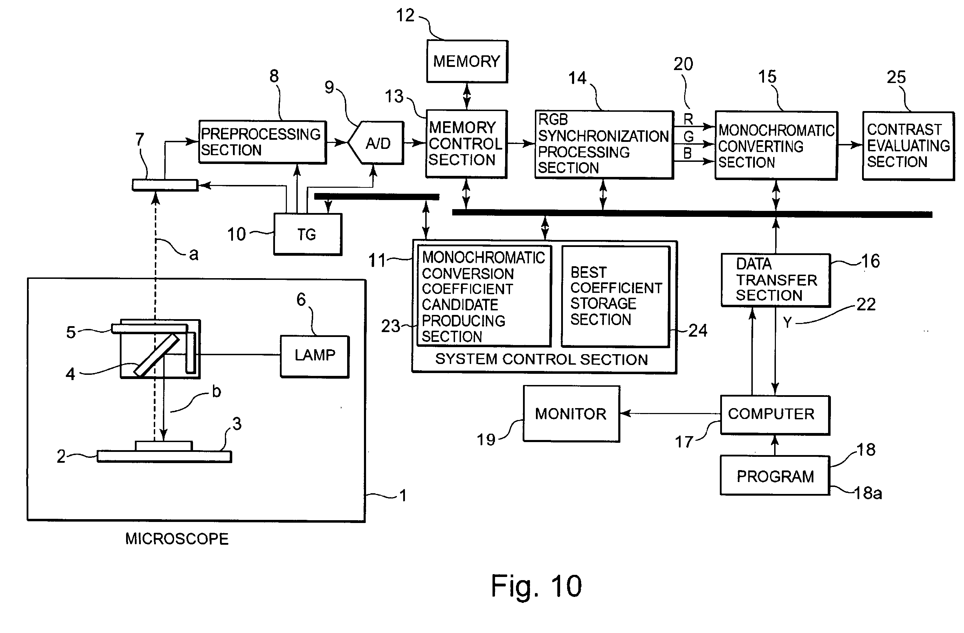

Next, a third embodiment will be described. FIG. 10 is a block diagram showing a configuration of a third embodiment. In the present embodiment, a monochromatic conversion coefficient candidate producing section 23 which produces a plurality of monochromatic conversion coefficients, and a best conversion coefficient storage section 24 are disposed in a system control section 11, and further a contrast evaluating section 25 is disposed which evaluates a contrast value of an output of the monochromatic converting section 15.

A function of the third embodiment will be described.

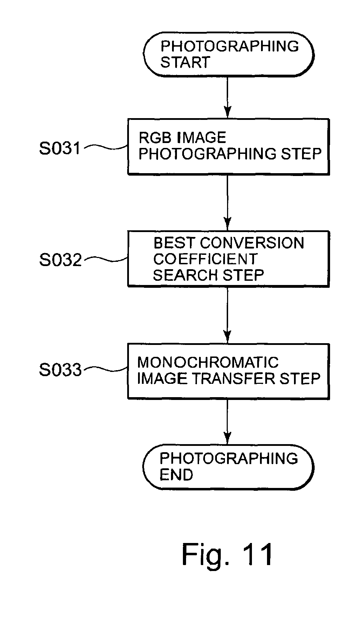

FIG. 11 is a flow chart showing an image pickup procedure of fluorescence observation in the third embodiment. When an operator instructs photographing start, first an RGB image photographing step is started, and the photographed RGB image is stored in a memory 12 in the same manner as in the embodiments described above (S031).

Subsequently, the monochromatic conversion coefficient candidate producing section 23 in the system control section 11 produces N monochromatic conversion coefficient candidates. One example of the conversion coefficient candidate produced at this time is as follows:

$$k_R = 0.1*m \ (m = 0, \ 1, \ 2, \ ... \ 10) \ ... \ (\text{Equation 2});$$

$$k_G = 0.1*n \ (n = 0, \ 1, \ 2, \ ... \ 10) \ ... \ (\text{Equation 3});$$

and

$$k_B = 1-k_R-k_G \ (k_B >= 0.0) \qquad ... \ (\text{Equation 4}).$$

When $k_R$, $k_G$ and $k_B$ are defined by Equations 2 to 4, respectively, N = 55 sets of conversion coefficient candidates are produced in accordance with a combination of m and n (S032). It is to be noted that the conversion coefficient candidates may be included as a table in a part of a processing program 18 beforehand.

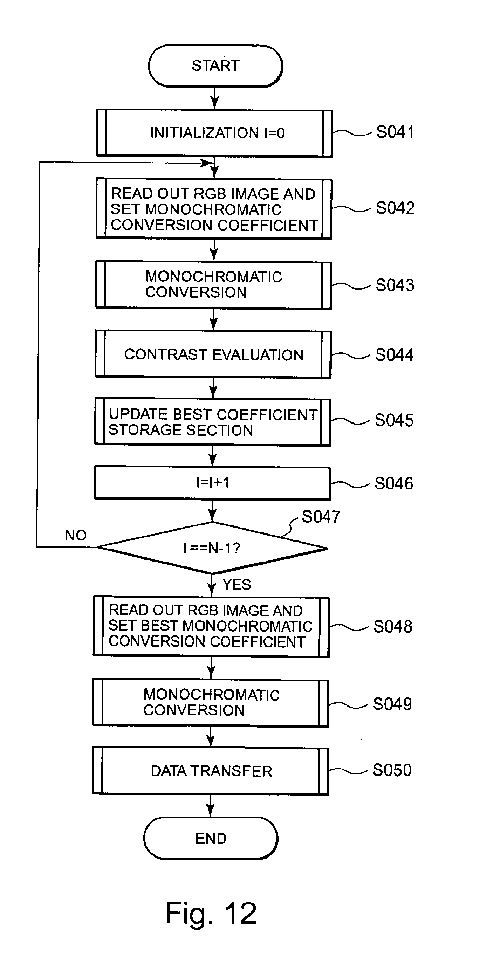

Next, the system control section 11 operates in accordance with a flow chart shown in FIG. 12 in order to extract such monochromatic conversion coefficients as to give the best contrast evaluation value. First, the system control section 11 performs initialization to set the number N of the conversion coefficient candidates to 55, set a counter I of the monochromatic conversion coefficients to 0, set a coefficient value BEST to be stored in the best conversion coefficient storage section to 0, and set an evaluation value BEST_VALUE of the best conversion coefficient storage section to 0 (S041).

The system control section 11 reads out an I-th monochromatic conversion coefficient to transfer it to a monochromatic converting section 15, and reads out an RGB image signal stored in the memory 12 to similarly transfer it to the monochromatic converting section 15 (S042).

The monochromatic converting section 15 produces a monochromatic image by use of the monochromatic conversion coefficients set in S042, and transfers the image to the contrast evaluating section 25 (S043).

The contrast evaluating section 25 calculates a contrast value EVAL of the monochromatic image acquired in S043 (5044). It is defined that the larger this contrast value EVAL is, the higher the contrast becomes.

The system control section 11 acquires the contrast value EVAL from the contrast evaluating section 25 to compare the value with the best evaluation value. Here, the comparison is performed by the following procedure.

When BEST_VALUE < EVAL, the following is set:

BEST = I; and
BESTVALUE = EVAL (S045).

The system control section 11 increments the counter I in order to evaluate the next conversion coefficient candidate (S046). When I = N, S048 is executed as described later. At another time, the flow returns to S042 (S047). All of 55 monochromatic conversion coefficient candidates are evaluated by this loop processing and the best conversion coefficient is set to BEST.

The system control section 11 reads out an RGB image from the memory 12, and inputs the best conversion coefficient into the monochromatic converting section 15 (S048). The monochromatic converting section 15 converts the RGB image into the monochromatic image by use of the best conversion coefficient set in S048 (S049).

As described above, according to the present embodiment, a plurality of monochromatic conversion coefficients are prepared, all the monochromatic conversion coefficients are successively applied to the photographed RGB image, and the best conversion coefficient is determined to produce a monochromatic image having the highest contrast evaluation value. Therefore, it is possible to obtain the monochromatic image having an excellent gray-scale characteristic.

While there has been shown and described what are considered to be preferred embodiments of the invention, it will, of course, be understood that various modifications and changes in form or detail could readily be made without departing from the spirit of the invention. It is therefore intended that the invention not be limited to the exact forms described and illustrated, but constructed to cover all modifications that may fall within the scope of the appended claims.

**Claims**

1. A microscopic image pickup apparatus to be attached to a microscope device (1) to which a plurality of specular methods are applicable, **characterized by** comprising:

    image pickup means (7) which outputs a microscopically observed image as a color image;
    coefficient setting means (17) which sets color image/monochromatic image conversion coefficients adapted to a selected specular method; and
    image converting means (15) which converts the color image into a monochromatic image by use of the set color image/monochromatic image conversion coefficients.

2. The microscopic image pickup apparatus according to claim 1, wherein the color image/monochromatic image conversion coefficients are arbitrarily settable by an operator.

3. The microscopic image pickup apparatus according to claim 1, wherein the color image/monochromatic image coefficient setting means sets conversion coefficients adapted to a selective wavelength of an optical filter interposed in an optical path of an illumination system and/or an observation system.

4. The microscopic image pickup apparatus according to claim 1, wherein the plurality of specular methods include a fluorescence observation method.

5. A microscopic image pickup method to acquire a monochromatic image by use of a microscopic image pickup apparatus to be attached to a microscope device to which a plurality of specular methods are applicable, **characterized by** comprising:

    outputting a microscopically observed image as a color image;
    setting color image/monochromatic image conversion coefficients adapted to a selected specular method; and
    converting the color image into the monochromatic image by use of the set color image/monochromatic image conversion coefficients.

6. The microscopic image pickup method according to claim 5, wherein the color image/monochromatic image conversion coefficients are arbitrarily settable.

7. The microscopic image pickup method according to claim 5, wherein as the color image/monochromatic image conversion coefficients, conversion coefficients are set which have been adapted to a selective wavelength of an optical filter interposed in an optical path of an illumination system and/or an observation system.

8. The microscopic image pickup method according to claim 5, wherein the plurality of specular methods include a fluorescence observation method.

Fig. 1

EP 1 814 301 A1

PHOTOGRAPHING
START

S001 — MONOCHROMATIC
CONVERSION
COEFFICIENT
SETTING STEP

S002 — MONOCHROMATIC IMAGE
PHOTOGRAPHING STEP

PHOTOGRAPHING
END

# Fig. 2

MONOCHROMATIC
CONVERSION

100 — ☑ ON

101 — ☑ R

102 — ☑ G

103 — ☐ B

# Fig. 3

CUSTOM GRAY SCALE

110 —— R ———[ ]——— 0.50

111 —— G ———[ ]——— 0.39

112 —— B —[ ]——— 0.11

# Fig. 4

Fig. 5

EP 1 814 301 A1

Fig. 6

Fig. 7

FLUORESCENCE CUBE

130

NV — WBV

NUA          WB

NU           WG

WU

131

☑ SET MONOCHROMATIC CONVERSION
COEFFICIENTS TO RECOMMENDED VALUES

## Fig. 8

FILTER WHEEL

141

FILTER3

FILTER2          FILTER4

FILTER1

142

☑ SET MONOCHROMATIC CONVERSION
COEFFICIENTS TO RECOMMENDED VALUES

## Fig. 9

Fig. 10

EP 1 814 301 A1

Fig. 11

START

INITIALIZATION I=0 — S041

READ OUT RGB IMAGE AND SET MONOCHROMATIC CONVERSION COEFFICIENT — S042

MONOCHROMATIC CONVERSION — S043

CONTRAST EVALUATION — S044

UPDATE BEST COEFFICIENT STORAGE SECTION — S045

I=I+1 — S046

S047

I==N-1?   NO   YES

READ OUT RGB IMAGE AND SET BEST MONOCHROMATIC CONVERSION COEFFICIENT — S048

MONOCHROMATIC CONVERSION — S049

DATA TRANSFER — S050

END

Fig. 12

European Patent
Office

**EUROPEAN SEARCH REPORT**

Application Number

EP 06 02 2078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 03/021209 A (BECTON DICKINSON CO [US]) 13 March 2003 (2003-03-13) * abstract * * figures 1,3 * * page 8, line 10 - page 10, line 2 * * page 15, line 5 - line 26 * | 1,2,4-6, 8 | INV. H04N1/40 |
| Y | US 2002/005855 A1 (MEHIGAN MICHAEL [JP]) 17 January 2002 (2002-01-17) * abstract * * paragraphs [0045] - [0053]; figure 1 * | 1,2,4-6, 8 | |
| A | US 5 547 849 A (BAER THOMAS M [US] ET AL) 20 August 1996 (1996-08-20) * column 5, line 33 - column 6, line 27; figure 1 * | 1-8 | |
| D,A | EP 1 107 176 A1 (SEIKO EPSON CORP [JP]) 13 June 2001 (2001-06-13) * the whole document * | 1-8 | |
| D,A | JP 2000 105820 A (SEIKO EPSON CORP) 11 April 2000 (2000-04-11) * abstract * | | TECHNICAL FIELDS SEARCHED (IPC)  H04N G06T |

The present search report has been drawn up for all claims

| Place of search | Date of completion of the search | Examiner |
|---|---|---|
| The Hague | 16 May 2007 | Beugin, Anne |

## ANNEX TO THE EUROPEAN SEARCH REPORT
## ON EUROPEAN PATENT APPLICATION NO.

EP 06 02 2078

16-05-2007

| Patent document cited in search report | | Publication date | Patent family member(s) | | Publication date |
|---|---|---|---|---|---|
| WO 03021209 | A | 13-03-2003 | EP<br>US | 1430278 A1<br>2003044967 A1 | 23-06-2004<br>06-03-2003 |
| US 2002005855 | A1 | 17-01-2002 | JP | 2002027260 A | 25-01-2002 |
| US 5547849 | A | 20-08-1996 | US | 5556764 A | 17-09-1996 |
| EP 1107176 | A1 | 13-06-2001 | WO<br>US | 0007144 A1<br>7027088 B1 | 10-02-2000<br>11-04-2006 |
| JP 2000105820 | A | 11-04-2000 | NONE | | |

**EP 1 814 301 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006021629 A
- JP 2000105820 A
- JP 7096005 A